# NEW EUROPEAN PATENT SPECIFICATION

(11) **EP 1 521 995 B2**
(45) Date of publication and mention of the opposition decision: **24.08.2011**
(45) Mention of the grant of the patent: 28.02.2007
(21) Application number: 03763989.5
(22) Date of filing: 11.07.2003
(51) Int. Cl.: G03B 21/00, G09F 3/02

(54) **LABEL INCORPORATING SECURITY FEATURES**
LABEL MIT INTEGRIERTEN SICHERHEITSMERKMALEN
ETIQUETTE DANS LAQUELLE SONT INCORPORES DES ELEMENTS DE SECURITE

(30) Priority: 12.07.2002 GB 0216242
(43) Date of publication of application: 13.04.2005
(73) Proprietor: De La Rue International Limited, Basingstoke, Hampshire RG22 4BS (GB)
(72) Inventor: PAYNE, Gerald, Sidney, Bath and North East Somerset BA3 2SG (GB); HOWLAND, Paul, Andover Hampshire SP10 2QR (GB)
(74) Representative: Bucks, Teresa Anne
(86) International application number: PCT/GB2003/002996
(87) International publication number: WO 2004/008240

(56) References cited:
- EP-A- 0 773 527
- GB-A- 2 353 498
- US-A- 4 551 373
- US-A1- 2002 020 739

## Description

The invention relates to labels and in particular to a label which can be used for security applications, such as an authentication certificate, means of identification or the like, as proof of the authenticity or origin of an article to which it is adhered.

Articles such as CD's, CD-ROM's and DVD's, as well as documents of value and means of identification, such as banknotes, passports, identification cards, certificates and the like, are vulnerable to copying or counterfeiting. The increasing popularity of colour photocopiers, electronic scanning and other imaging systems, and the improving technical quality of colour photocopiers, has led to an increase in the counterfeiting of such documentation and articles. There is, therefore, a need to improve the security features of such items to add additional security features or to enhance the perceptions and resistance of simulation to existing features.

Steps have already been taken to introduce optically variable features into labels which are applied to such articles and documentation to provide an indication of the authenticity of the goods or documents, and to provide a tamper-indicator. Such labels, for example as described in EP-A-0 773 527, cannot be reproduced by a photocopier or an electronic scanner due to the watermark incorporated in the labels. However, there is a demand to introduce labels which include further security features which are still discernible by the naked eye but are "invisible" to, or viewed differently by, a photocopier or scanner, whilst still maintaining the small size of the label. Since the photocopying process typically involves reflecting high energy light on an original document containing the image to be copied, one solution is to incorporate one or more features into the label which have a different perception in reflected and transmitted light. Some examples of such security features include watermarks, embedded security threads, fluorescent pigments and the like.

Unfortunately, for labels containing these security features the ability to inspect the labels in both reflected and transmitted light is necessary to identify the differences. These types of features have therefore not been considered to be suitable for applications where only one side of the label can be viewed in reflected light, e.g. on a label stuck to another article.

A further problem lies in the fact that for many security applications, the security labels must be small, which means that not much space is available for printed information and security features. It is an object of the present invention to overcome or reduce these disadvantages and provide a label, which can be small in size yet provide sufficient room for the necessary branding and/or printed information required by the manufacturer as well as security features which are detectable in transmissive light and/or reflective light such as watermarks, embedded security threads, fluorescent pigments and the like.

Other examples of conventional labels are disclosed in GB-A-2 353 498 and US-A-4 551 373.

According to the present invention there is therefore provided a label as defined in claim 1.

Thus a label comprising the flap feature of the present invention has wide-ranging security applications as it can be checked for authenticity before application and in-situ by viewing in transmitted light and, if watermarks or other tactile features are included, also by touch. Labels according to the present invention provide a high degree of security because they cannot be accurately photo-copied, due to the use of both sides of the label, even if the label is removed from the article to which it is attached.

The adhesive which attaches the label to a document or article may be repositionable, or permanent so that attempts to remove the label result in damage to the label. Suitable adhesives include a water activated gum, a self-adhesive coating with a protective silicone backing, a double-sided tape or sheet. The adhesive itself may be ultra violet curable, pressure sensitive, hot melt, permanent or a repositionable adhesive.

The constituents of the base layer may be natural, synthetic or a combination of natural and synthetic.

A preferred embodiment of the present invention will now be described in detail, by way of example only, with reference to the accompanying drawings in which:
Figure 1 shows a plan view of a label according to a first embodiment of the present invention.
Figure 2 shows a side cross sectional elevation of the label shown in Figure 1, on a vertically exaggerated scale;
Figure 3 shows a perspective view of the label of Figure 1, in a viewing position;
Figure 4 shows a perspective view of a label according to a second embodiment of the present invention, in a viewing position;
Figure 5 shows a side cross-sectional elevation of the label of Figure 4 in a non-viewing position;
Figure 6 shows a label according to a third embodiment of the present invention, in a non-viewing position; and
Figure 7 shows a label according to a fourth embodiment of the present invention, in a viewing position.

A label 10 is formed from a layer 11 of a substrate, such as paper or plastic, which layer 11 has a first surface 12 and a second opposing surface 13. The label 10 comprises a first section 15 and a second section 16 which are joined along a fold line 14. An adhesive 18 is applied to the second surface 13 of the first section 15, to enable the label 10 to be attached to an article or document.

The adhesive 18 can be any suitable adhesive applied in a variety of forms, including a water activated gum, a self-adhesive coating with a protective silicone backing, a double-sided tape or sheet. The adhesive 18 itself may be ultra violet curable, pressure sensitive, permanent or a repositionable adhesive. The nature of the adhesive composition dictates the thickness of the layer of adhesive 18.

A second adhesive 17 is also applied to either the first surface 12 of the second section 16 or a portion of the first surface 12 of the first section 15, to allow the second section 16 to be adhered to the first section 15. The adhesive 17 on the first surface 12 of the second section 16 is any suitable repositionable adhesive, such as one of the "Dry Peel" adhesives available from Beardow Adams (RTM).

In a non-viewing position the first and second label sections 15, 16 are folded along fold line 14 and adhered to each other. The adhesive layer 18 secures the closed label to an article or document with the second surface 13 of the second (flap) section 16 facing upwards.

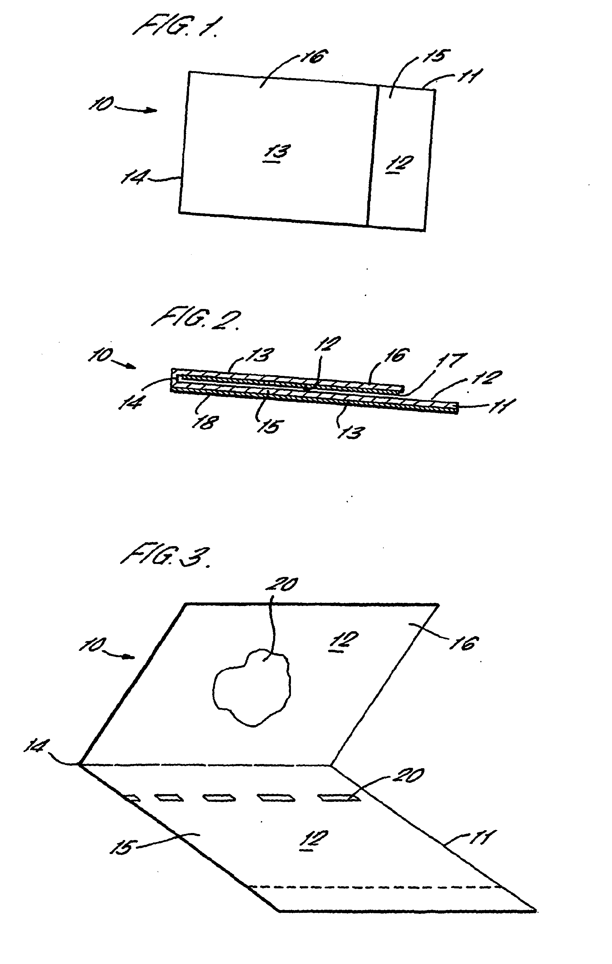

The label 10 is also provided with one or more security features 20 which are detectable in transmissive light and/or reflective light such as watermarks, embedded or windowed security threads, fluorescent pigments and the like. Two such features are illustrated in Figure 3, one being a watermark image and the other a windowed security thread.

The security features is not necessary to view the security feature in transmissive light. If a security feature is to be viewed in transmissive light it is located within, or on either of surfaces 12, 13 of the second section 16. Security features can also be located on the first and/or second surface 12 of the second section 16. These features will be concealed when the second section 16 is in its non-viewing position. However, when the label 10 is opened, by peeling the second section 16 away from the first section 15 and lifting it, the concealed features will be revealed and the second section 16 can be held in a position whereby it can be viewed in transmissive light, to examine the transmissive security features therein.

The layer of substrate 11 may be of paper made using known papermaking machines, such as a cylinder mould or Fourdrinier machines, or it may even be handmade. A range of fibre types can be used in the making of such paper including synthetic or natural fibres or a mixture of both.

Plastic substrates can be cast or extruded, as known in the prior art for similar applications.

The security features 20 are created in a known manner, for example as disclosed in EP-A-0059 056 (window threads), EP-A-0650 413 (liquid crystal watermarks), US-A-5,465,301 (thermochromic thread) or GB 2323 814 (demetallised threads).

A whole variety of security features may be included in the label 10 according to the present invention to enhance the security of the label 10. For example, a wide range of different types of security thread can be used, including holographic threads, demetallised threads, demetallised holographic threads, fluorescent threads, thermochromic threads, coloured/metallised threads, threads with a chip or other machine-readable element, print see-through features, machine-readable threads, optically variable threads and microprinted threads. The threads may be wholly embedded or windowed threads, or may be embedded in a manner such that a continuous length of the thread is revealed in one surface of the substrate 11.

Other surface features may also be included such as planchette bands, fibre bands, iridescent coatings and transparentising coatings and print.

Labels 10 according to the present invention are also compatible with many known forms of printing such as intaglio, flexo-gravure, ink jet, hot foil stamping and so on. The labels 10 may also have a glossy or other finish which is clear or translucent.

Advantageously, the labels 10 may bear a brand name, image or printed information on the second surface 13 of the second section 16 which can clearly be seen when the second section 16 is adhered to the first section 15 in its non-viewing position, as shown in Figures 1 and 2. When in the viewing position, as shown in Figure 3, the security features can be viewed in transmissive light as required.

In the embodiment shown in Figures 1 to 3, the first and second sections 15, 16 are both rectangular in shape, although the first section 15 is larger than the second section 16. However, the first and second sections 15, 16 could also be of any shape and could both be the same size.

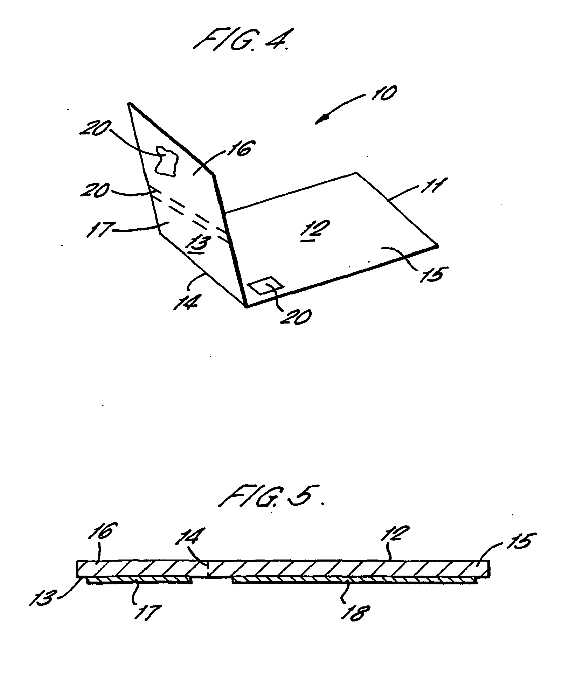

A second embodiment of the label 10, which comprises first and second sections 15, 16, is shown in Figure 4. In this embodiment the repositionable adhesive layer 17 is on the second surface 13 of the second section 16, which means that in a non-viewing position the sections 15, 16 are not folded about fold line 14, but lie contiguously in the same plane, as shown in Figure 5.

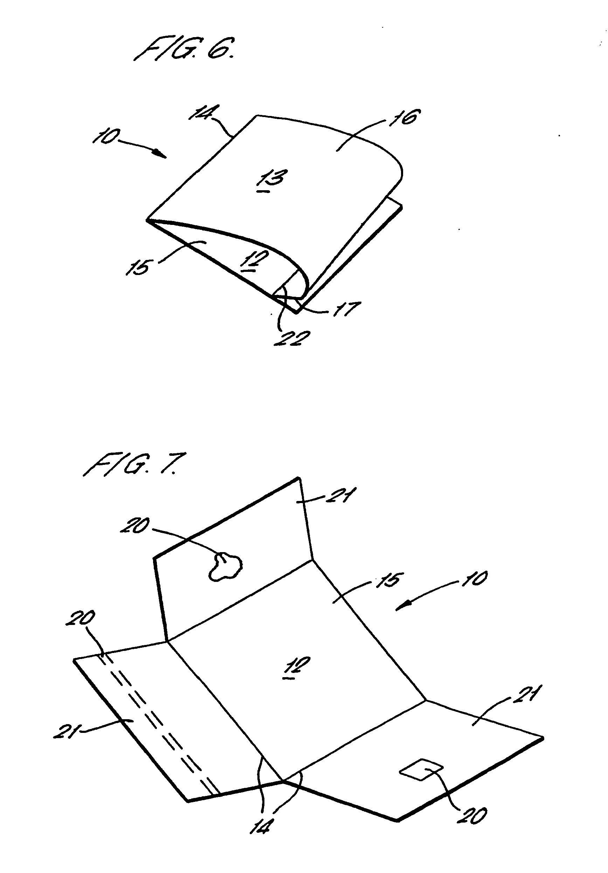

In a third embodiment of the present invention, as shown in Figure 6, the repositionable adhesive 17 is applied to the second surface 13 of the second section 16. In order to attach the second section 16 to the first section 15, an edge 22 of the second section 16 is curved towards the fold 14 such that the second surface 13 of the second section 16 is in contact with the first surface 12 of the first section 15.

The label 10 may also be provided with a plurality of liftable sections 21, in accordance with a fourth embodiment of the present invention, as shown in Figure 7. In this embodiment, three liftable sections 21 are provided which each hinge about the first section 15 about a fold line 14. In this embodiment, a different security feature 20 may be provided in each liftable section 21, although equally the same security feature 20 could be used for each liftable section 21. Alternatively more than one security feature 20 could appear on one or more of the liftable sections 21. This embodiment is particularly advantageous for applications which require the label 10 to carry a large amount of branding, graphics or other information without the need for a label 10 which is as big as the article to which it is applied.

It is envisaged that the thickness of the substrate layer 11 for making a label 10 according to the present invention will be in the range of 50-130 µm, more preferably 80-100 µm, although this range is not limiting. The substrate from which the label 10 is made does not need to be particularly thick, and can be less strong than the paper used for banknotes or other similar security documentation which must be hardwearing and resilient due to their continuous handling.

For a label, however, this is not a disadvantage as the label 10 is supported by its backing, before application, or by the article or document to which it is adhered, after application. Furthermore, in any attempted removal of such a label 10 from the article to which it is adhered, a slight weakness in the paper layer 11 is likely to lead to tearing, thus providing a tamper-proof feature. However, the layer 11 must be strong enough that lifting the second section 16, particularly against the pulling force of the adhesive layer 17, does not result in tearing.

In one specific example of the present invention, the preferred grammage of a paper substrate used as layer 11 is 50-120gsm, more preferably 70-90gsm, although this range is not limiting.

In a further embodiment of the invention the label 10 has a backing paper which is used to protect the label before it is applied to an article or document. A clear or highly translucent backing may be used to enable any security feature 20 incorporated in the first section 15 of the label 10 to be checked in transmitted as well as reflected light before the backing is removed and before application of the label. However, a non-translucent backing may also be used, which requires the removal of the backing before the label 10 can be checked prior to application.

The substrate layer 11 of the label 10 may be a single or two-ply layer. Two-ply paper, for example, is generally made using two separate vats of papermaking furnish which produce two substrates which are compressed together to form a finished paper.

A two-ply label can also be made according to the present invention in which one-ply is of paper and the other is of plastic, such as a clear or a coloured film.

The second section 16 of the label 10 may be removable from the first section 15 of the label 10, according to a further embodiment of the present invention. The fold line 14 may be perforated to ease separation of the first and second sections 15, 16 or a pull tab along the fold line 14 may be incorporated in the label 10 to separate the two sections.

The labels 10 according to the present invention may have a wide range of uses especially as certificates of origin or authentication, and in particular in fields where counterfeiting of the products to which the labels 10 are attached is or may be rife, such as high value added or fast moving consumer goods, for example CD's and DVD's.

Although several specific embodiments of the present invention have been described above, the features described may be used in any combination without departing from the scope of the claims.

## Claims

1. A label (10) comprising a substrate (11), having first (12) and second (13) opposing surfaces, said substrate further comprising a first (15) section joined to one or more second (16) sections, an adhesive (18) applied to the first section (15) on the second surface (13) of the substrate for adhering the label, in use, to an article, at least one security feature (20) incorporated in or on to said one or more second sections (16), which security feature (20) is concealed when said one or more second sections (16) is/are adhered in a folded or, a not folded non-viewing position in which the first and said one or more second sections (15, 16) lie contiguously in the same plane non-viewing position, and which is visible in transmissive light when said one or more second sections (16) is/are lifted into a viewing position.

2. A label (10) as claimed in claim 1 wherein at least one security feature (20) is incorporated in or on the said one or more second sections (16) and is visible in reflected light.

3. A label (10) as claimed in any one of the preceding claims, wherein at least one security feature (20) is located on the first and/or second surfaces (12,13) of the said one or more second sections (10).

4. A label (10) as claimed in any one of the preceding claims, wherein the first and said one or more second sections (15,16) hinge about a fold line (14).

5. A label (10) as claimed in any one of the preceding claims, further comprising a second repositionable adhesive (17) applied to at least a part of one surface of the said one or more second sections (16).

6. A label (10) as claimed in claim 5, wherein the repositionable adhesive (17) is applied to the first surface (12) of the said one or more second sections (16) such that it adheres to the first section (15) in the non-viewing position.

7. A label (10) as claimed in claim 5 when dependent on any one of claims 1 to 3, wherein the repositionable adhesive (17) is applied to the second surface (13) of the said one or more second sections (16) such that it can be adhered in use, to an article.

8. A label (10) as claimed in any one of the preceding claims, wherein the at least one security feature (20) is an elongated security element.

9. A label (10) as claimed in claim 8, wherein the security element (20) is partially or wholly embedded within the substrate.

10. A label (10) as claimed in any one of the preceding claims, wherein the substrate comprises a plurality of second sections (16), each of which is liftable from a non-viewing position to a viewing position.

11. A label (10) as claimed in any one of the preceding claims, wherein the said one or more second sections (16) of the label (10) is separable from the first section (15) of the label (10).

12. A label (10) as claimed in claim 11, wherein separation of the first and one or more second sections (15,16) occurs at the fold line (14) by means of perforations along the fold line (14).

## Patentansprüche

1. Etikett (10), umfassend ein Substrat (11) mit einer ersten (12) und einer gegenüberliegenden zweiten (13) Oberfläche, wobei das genannte Substrat ferner umfasst:
einen ersten (15) Abschnitt, der mit einem oder mehreren zweiten (16) Abschnitten verbunden ist, einen Kleber (18), der auf dem ersten Abschnitt (15) auf der zweiten Oberfläche (13) des Substrats angebracht ist, um das Etikett im Gebrauch an einem Gegenstand anzubringen,
wenigstens ein Sicherheitselement (20), welches in oder auf wenigstens einen oder die mehreren zweiten Abschnitte (16) integriert ist, welches Sicherheitselement (20) verborgen ist,
wenn die genannten einen oder mehreren zweiten Abschnitte (16) in einer gefalteten, nicht sichtbaren Position oder einer nicht gefalteten, nicht sichtbaren Position, in der die ersten und zweiten Abschnitte (15,16) in derselben Ebene angrenzend liegen, befestigt sind, und welches im Durchlicht sichtbar ist, wenn die genannten einen oder mehreren zweiten Abschnitte (16) in eine Betrachtungsposition gehoben sind.

2. Etikett (10) nach Anspruch 1, wobei wenigstens ein Sicherheitselement (20) in oder auf dem ersten oder den mehreren zweiten Abschnitten (16) integriert und in reflektiertem Licht sichtbar ist.

3. Etikett (10) nach einem der vorhergehenden Ansprüche, wobei wenigstens ein Sicherheitselement (20) auf der ersten und/oder der zweiten Oberfläche (12, 13) des einen oder der mehreren zweiten Abschnitte (10) positioniert ist.

4. Etikett (10) nach einem der vorhergehenden Ansprüche, wobei die ersten und der eine oder mehrere zweite Abschnitte (15, 16) um eine Faltlinie (14) schwenkbar sind.

5. Etikett (10) nach einem der vorhergehenden Ansprüche, ferner umfassend einen zweiten, wieder anbringbaren Kleber (17), angebracht an wenigstens einem Teil einer Oberfläche des einen oder mehrerer zweiten Abschnitte (16).

6. Etikett (10) nach Anspruch 5, wobei der wieder anbringbare Kleber (17) an der ersten Oberfläche (12) des einen oder mehrerer zweiten Abschnitte (16) angebracht ist, so dass er in der nicht sichtbaren Position an dem ersten Abschnitt (15) anklebt.

7. Etikett (10) nach Anspruch 5, wenn dieser auf einen der Ansprüche 1 bis 3 rückbezogen ist, wobei der wieder anbringbare Kleber (17) auf der zweiten Oberfläche (13) des einen oder der mehreren zweiten Abschnitte (16) angebracht ist, so dass er im Gebrauch an einem Gegenstand anbringbar ist.

8. Etikett (10) nach einem der vorhergehenden Ansprüche, wobei das wenigstens eine Sicherheitselement (20) ein längliches Sicherheitselement ist.

9. Etikett (10) nach Anspruch 8, wobei das Sicherheitselement (20) teilweise oder ganz in das Substrat eingebettet ist.

10. Etikett (10) nach einem der vorhergehenden Ansprüche, wobei das Substrat eine Mehrzahl von zweiten Abschnitten (16) umfasst, von denen jeder von einer nicht sichtbaren Position in eine sichtbare Position hebbar ist.

11. Etikett (10) nach einem der vorhergehenden Ansprüche, wobei der eine oder mehrere zweite Abschnitte (16) des Etiketts (10) von dem ersten Abschnitt (15) des Etiketts (10) trennbar ist.

12. Etikett (10) nach Anspruch 11, wobei die Trennung der ersten und des einen oder mehrerer zweiter Abschnitte (15, 16) an einer Faltlinie (14) mit Hilfe von Perforationen entlang der Faltlinie (14) erfolgt.

## Revendications

1. Etiquette (10) comportant un substrat (11) ayant des première (12) et seconde (13) surfaces opposées, ledit substrat comportant en outre une première section (15) jointe à une ou plusieurs secondes sections (16), un adhésif (18) appliqué à la première section (15) sur la seconde surface (13) du substrat pour faire adhérer l'étiquette, lors de l'utilisation, à un article, au moins un motif (20) de sécurité incorporé dans ou sur ladite une ou plusieurs secondes sections (16), lequel motif (20) de sécurité est masqué lorsque ladite une ou lesdites plusieurs secondes sections (16) est/sont collées dans une position pliée de non-visibilité, ou une position non pliée de non-visibilité dans laquelle la première et ladite une ou lesdites plusieurs secondes sections (15, 16) sont disposées de façon contiguë dans le même plan, et qui est visible en lumière de transmission lorsque ladite une ou lesdites plusieurs secondes sections (16) est/sont soulevées jusque dans une position de visibilité.

2. Etiquette (10) selon la revendication 1, dans laquelle au moins un motif (20) de sécurité est incorporé dans ou sur ladite une ou lesdites plusieurs secondes sections (16) et est visible en lumière réfléchie.

3. Etiquette (10) selon l'une quelconque des revendications précédentes, dans laquelle au moins un motif (20) de sécurité est placé sur la première et/ou la seconde surface (12, 13) de ladite une ou desdites plusieurs secondes sections (10).

4. Etiquette (10) selon l'une quelconque des revendications précédentes, dans laquelle la première et ladite une ou lesdites secondes sections (15, 16) sont articulées autour d'une ligne de pliage (14).

5. Etiquette (10) selon l'une quelconque des revendications précédentes, comportant en outre un second adhésif repositionnable (17) appliqué sur au moins une partie d'une surface de ladite une ou desdites plusieurs secondes sections (16).

6. Etiquette (10) selon la revendication 5, dans laquelle l'adhésif repositionnable (17) est appliqué sur la première surface (12) de ladite une ou desdites plusieurs secondes sections (16) de manière qu'il adhère à la première section (15) dans la position de non-visibilité.

7. Etiquette (10) selon la revendication 5 lorsqu'elle dépend de l'une quelconque des revendications 1 à 3, dans laquelle l'adhésif repositionnable (17) est appliqué à la seconde surface (13) de ladite une ou desdites plusieurs secondes sections (16) de manière qu'il puisse adhérer, lors de l'utilisation, à un article.

8. Etiquette (10) selon l'une quelconque des revendications précédentes, dans laquelle le, au moins un, motif (20) de sécurité est un élément allongé de sécurité.

9. Etiquette (10) selon la revendication 8, dans laquelle l'élément (20) de sécurité est encastré partiellement ou totalement dans le substrat.

10. Etiquette (10) selon l'une quelconque des revendications précédentes, dans laquelle le substrat comporte plusieurs secondes sections (16) pouvant être soulevées chacune d'une position de non-visibilité à une position de visibilité.

11. Etiquette (10) selon l'une quelconque des revendications précédentes, dans laquelle ladite une ou lesdites plusieurs secondes sections (16) de l'étiquette (10) peuvent être séparées de la première section (15) de l'étiquette (10).

12. Etiquette (10) selon la revendication 11, dans laquelle la séparation de la première et de ladite une ou desdites plusieurs secondes sections (15, 16) a lieu au niveau de la ligne de pliage (14) au moyen de perforations suivant la ligne de pliage (14).
